# EUROPEAN PATENT SPECIFICATION

(11) **EP 3 209 713 B1**
(45) Date of publication and mention of the grant of the patent: **26.09.2018**
(21) Application number: 15784358.2
(22) Date of filing: 21.10.2015
(51) Int. Cl.: C08K 3/00, C08K 3/40, C08K 7/14

(54) **REINFORCED POLYMER MOLDING COMPOSITION**
VERSTÄRKTE POLYMERFORMMASSE
COMPOSITION DE MOULAGE POLYMÈRE RENFORCÉE

(30) Priority: 24.10.2014 CN 201410575608; 03.11.2014 EP 14191538
(43) Date of publication of application: 30.08.2017
(73) Proprietor: DSM IP Assets B.V., 6411 TE Heerlen (NL)
(72) Inventor: BURGT, VAN DER, Frank Peter Theodorus Johannes, NL-6100 AA Echt (NL); XU, Xubo, NL-6100 AA Echt (NL)
(74) Representative: DSM Intellectual Property
(86) International application number: PCT/EP2015/074387
(87) International publication number: WO 2016/062774

(56) References cited:
- EP-A1- 2 028 231
- EP-A1- 2 703 435
- EP-A1- 2 703 436

## Description

The invention relates to a fiber reinforced polymer molding composition, comprising a thermoplastic polymer and a fibrous reinforcing agent, and to components made thereof.

Specifically the invention relates to polymer molding compositions with improved mechanical characteristics. This is attained through a combination of a thermoplastic polymer and a specific mixture of glass fibers. The molding compositions invented here can be used for manufacturing molded parts, which can be semi-finished as well as finished products, or be used as components in assembled products. In particular the thermoplastic polymer is a thermoplastic polyamide.

Thermoplastic polymer, such as thermoplastic polyamides, are widely used as structural elements in indoor and outdoor applications due primarily to their outstanding mechanical characteristics, such as strength and stiffness. An improvement in these mechanical characteristics can be attained in particular by the addition of fiber-shaped reinforcing materials, such as glass fibers. Reinforced polymer molding composition, comprising a thermoplastic polymer and a fibrous reinforcing agent are well known in the art.

Reinforcing agents are applied in molding composition to enhance the mechanical properties, such as tensile modulus, tensile strength, elongation at break and impact properties, of thermoplastic polymers. As fibrous reinforcing agent different grades of fibers have been developed and applied, in order to optimize and improve the effect thereof on the mechanical properties of the molding composition. These include carbon fibers, and different grades of glass fibers, such as A-glass, C-glass, D-glass, E-glass, M glass fibers, Q-glass, R-glass, S-glass. E glass fibers are generally preferred and most widely used.

EP2 703 435 A1 discloses thermoplastic polyamide moulding compositions comprising glass fibres, the moulding compositions offering improved mechanical properties. The glass fibres are made from E-glass or from S-glass, S-glass fibres and E-glass fibres are not used in combination.

According to US20080167415A1, E-glass fibers generally provide the best properties in terms of tensile modulus, tensile strength, elongation at break and impact properties. Also according to US2014/0066561A1, E-glass fibers with a circular cross section are used almost exclusively when reinforcing polyamide molding compounds with glass fibers. If higher demands are placed on the mechanical characteristics, especially impact resistance or transverse strength or warping, E-glass fibers with a non-circular cross section, so-called flat glass fibers, offer a possible solution. Flat glass fibers with an axial ratio of the cross-sectional axes in the range of 2 - 4 exist. It is expected that further optimization of the cross-sectional geometry of this axial ratio will bring only a slight improvement in mechanical characteristics and warping.

As mentioned in US2014/0066561A1, if glass fibers with equal transverse cross-sectional area and diameter are considered, then improvements can only be attained by a different composition of the raw glass material that improves the strength, tensile properties, and stiffness of the glass filaments. One such example would be S-glass fibers, which are currently almost exclusively used in the form of roving (continuous filaments) for military applications and are superior to E-glass fibers in terms of glass filament characteristics. According to the ASM Handbook, Vol. 21: Composites (106781G), S-glass fibers show 12% higher stiffness, 25% higher tensile strength, and 20% higher ultimate elongation in comparison to E-glass fibers. As also mentioned in US2014/0066561A1, experiments with polyamide molding compounds reinforced with S-glass fibers show, however, that the advantages of these glass fibers cannot be transferred, or can be transferred to a very limited extent, to glass fiber reinforced polyamide molding compounds, even if the sizing was optimized for these molding compounds. In many compounds that do not contain any particulate filler material, E-glass fiber with a round or flat cross section is superior even to high-performance S-glass fiber.

With miniaturization taking place in many applications, parts become thinner and mechanical properties like elongation and tensile strength become more critical. There is a need for compositions that have better properties, in particular for compositions having a larger elongation at break without giving in too much on tensile strength or modulus, or vice versa having a better tensile strength or modulus without giving in too much on elongation. However, while it is already difficult to improve one of the mechanical properties in limited extend, one needs to take care not to give in too much in other properties. For example, increase in tensile strength is generally achieved at the cost of elongation, while increase in elongation generally occurs at the cost of tensile strength.

The aim of the present invention is to provide a fiber reinforced polymer composition that has a better overall balance in mechanical properties and in particular better in elongation at break and/or in tensile strength.

This aim has been achieved with the composition according to the invention, wherein the composition comprises a thermoplastic polymer and a mixture of glass fibers made of E-glass and glass fibers made of High Strength-glass.

Surprisingly, it has been shown that the mixture of glass fibers made of E-glass and glass fibers made of High Strength-glass has a synergistic effect on the mechanical properties of molded parts made from the reinforced polymer molding composition according to the invention. Generally, the elongation at break shows values well above the average value, or more particular above each of the glass types used individually. At the same time, the tensile strength of the reinforced polymer composition comprising the mixture remains at a good level, in between that of the compositions with the individual fibrous reinforcing agent. In other embodiments, the tensile strength of the reinforced polymer composition according to the invention lies well above each of the E-glass and High Strength-glass used individually. At the same time, the elongation at break of the reinforced polymer composition comprising the mixture remains at a good level, comparable to those of the compositions with the individual fibrous reinforcing agent.

With E-glass fibers, i.e. glass fibers made of E-glass is herein understood, In accordance with ASTM D578-0, glass fibers made of a glass composition consisting of 52 - 62 wt.% silicon dioxide (SiO₂), 12 - 16 wt.% aluminum oxide (Al₂O₃), 16 - 25 wt.% calcium oxide (CaO), 0 - 10 wt.% boron oxide (B₂O₃), 0 - 5 wt.% magnesium oxide (MgO), and 0 - 5 wt.% other components, wherein the weight percentages (wt.%) are relative to the total weight of the E-glass.

Particular grades of E-glass comprise magnesium oxide in an amount 5 - 10 wt.%. As other components, E-glass may comprise, for example, 0-2 wt.% alkali oxides, 0-1.5 wt.% titanium dioxide, and 0-0.8% ferric oxide. E-glass fibers suitably have a density of 2.54-2.62 g/cm3, a tensile modulus of 70-75 GPa, a tensile strength of 3000-3500 MPa, and an ultimate elongation of 4.5-4.8%, whereby the characteristics of individual fibers include a diameter of 10 µm and a length of 12.7 mm, measured at 23' C with a relative humidity of 50%.

The E-glass fibers suitably have a circular cross section (i.e. round glass fibers) or have a non-circular cross-section with different cross-sectional axes. The E-glass fibers with the non-circular cross section suitably have an axial ratio of the cross-sectional axes in the range of 1.5 - 6, more particular 2 - 4.

The High Strength glass fibers, i.e. glass fibers made of High Strength glass, are suitably made of a glass composition consisting of 57 - 70 wt.% silicon dioxide, 18 - 30 wt.% aluminum oxide, 0 - 10 wt.% calcium oxide, 0 - 5 wt.% boron oxide, 7 - 15 wt.% magnesium oxide, and 0 - 5 wt.% other components, wherein the weight percentages (wt.%) are relative to the total weight of the High Strength glass.

In a preferred embodiment, the High Strength glass consists of 58 - 68 wt.% silicon dioxide, 20 - 28 wt.% aluminum oxide, 0 - 5 wt.% calcium oxide, 0 - 5 wt.% boron oxide, 8 - 13 wt.% magnesium oxide, and 0 - 5 wt.% other components, wherein the weight percentages (wt.%) are relative to the total weight of the High Strength-glass.

In a particular embodiment, the High Strength glass consists of 62 - 66 wt.% silicon dioxide, 22 - 27 wt.% aluminum oxide, 0 - 5 wt.% calcium oxide, 0 - 3 wt.% boron oxide, 8 - 12 wt.% magnesium oxide, and 0 - 3 wt.% other components, wherein the weight percentages (wt.%) are relative to the total weight of the High Strength-glass.

An example of a suitable High Strength glass is S-glass. The composition of S-glass is typically 64 - 66 wt.% silicon dioxide, 22 - 25 wt.% aluminum oxide, 0 - 1 wt.% calcium oxide, 0 - 3 wt.% boron oxide, 9 - 11 wt.% magnesium oxide, and 0 - 3 wt.% other components, wherein the weight percentages (wt.%) are relative to the total weight of the High Strength-glass.

The High Strength-glass fibers suitably have a circular cross section (i.e. round glass fibers) or have a non-circular cross-section with different cross-sectional axes. The High Strength -glass fibers with the non-circular cross section suitably have an axial ratio of the cross-sectional axes in the range of 1.5 - 6, more particular 2 - 4.

The glass fibers used for the preparation of the composition according to the invention may have a length and diameter varying over a wide range. The diameter of the glass fiber is suitably in a range from 5 µm up to and including 20 µm (microns). The fibers may be applied as rovings, as non-chopped glass fibers, as well as chopped glass fibers. Favorably for compounding, chopped glass fibers are used. The chopped glass fibers suitably have a glass fiber length in a range of 2 mm up to and including 50 mm. The length of the glass fibers in the molding composition may be even much shorter. Suitably, the weighted average length of the glass fibers in the molding composition is in a range of 50 µm up to and including 5 mm, preferably range of 50 µm up to and including 500 µm.

Suitably, the E-glass and the High Strength-glass are present in the composition according to the invention in a weight ratio E:HS in a range from 15:85 up to and including 80:20.

In a preferred embodiment the weight ratio E:HS is in the range from 20:80 up to and including 70:30, more particular from 25:75 up to and including 60:40. This has the advantage that an even better combination of high elongation and a high tensile strength is obtained.

The glass fiber reinforcing agent in the composition according to the invention may be present in an amount varying over a wide range. Suitably, the mixture of E-glass and High Strength-glass constitutes at least 20 wt.% and at most 75 wt.% of the composition. Since for many molding applications often a high tensile strength is required while at the same time the elongation at break may become critical, the combined amount of E-glass and High Strength-glass is at least 15 wt.%, preferably at least 25 wt.% or at least 30 wt.%. More preferably, the E-glass and High Strength-glass are present in a combined amount in the range of 40 - 70 wt.%. The combined amount may be any amount in that range, for example, 50 wt.% or 60 wt.%.

With the notation "in the range of X - Y" is herein understood that X and Y represent the lower and upper limit of the range and are included in that range.

The weight percentages (wt.%) of the components in the molding composition mentioned herein, are all relative to the total weight of the composition, unless specifically indicated otherwise.

The fibrous reinforcing agent in the composition according to the invention may additionally comprise other fibers, i.e. different from the E-glass fibers and High Strength-glass fibers. Examples thereof include carbon fibers, polymeric fibers and glass fibers with compositions different from E-glass and High Strength-glass. Preferably, the composition comprises less than 25 wt% of other fibers. More preferably, the other fibers are present in an amount in the range of 0 - 10 wt.%. Herein the weight percentage (wt.%) is relative to the total weight of fibrous reinforcing agent in the composition.

In a particular embodiment of the invention, the E-glass fibers, or the High Strength-glass fibers, or the E-glass fibers and the High Strength-glass fibers, have a non-circular cross section. More particular, the fibers having a non-circular cross are flat glass fibers with an axial ratio of the cross-sectional axes in the range of 1.5 - 6, preferably in the range of 2 - 4. The advantage is that not only the tensile strength and/or elongation are improved, but also other mechanical characteristics can be improved, especially increased impact resistance or transverse strength or reduced warping. With warping is herein understood the deformation of the molded part upon demoulding,

The thermoplastic polymer in the composition according to the invention can be any thermoplastic polymer suitable for making molded parts. Suitably, the thermoplastic polymer comprises a thermoplastic polymer selected from LCP, polyester, PPS, polycarbonate and polyamide. Preferably, the thermoplastic polymer molding composition according to the invention is a thermoplastic polyamide molding composition comprising a thermoplastic polyamide.

Suitably, the thermoplastic polyamide comprises a semi-crystalline thermoplastic polyamide, or an amorphous thermoplastic polyamide, or a combination thereof. Also suitably, the thermoplastic polyamide comprises an aliphatic thermoplastic polyamide, or a semi-aromatic thermoplastic polyamide, or a combination thereof. More particular, the composition suitably comprises a semi-crystalline aliphatic thermoplastic polyamide, or a semi-crystalline semi-aromatic thermoplastic polyamide or an amorphous semi-aromatic thermoplastic polyamide, or any combination thereof.

With a semi-crystalline polyamide is herein understood a polyamide that is partially amorphous and partially crystalline, and that has a melt enthalpy of at least 10 J/g. Herein the melt enthalpy is measured by the DSC method according to ISO-11357-1/3, 2011, in an N2 atmosphere with a heating rate of 20°C/min in the first heating cycle.

With an amorphous polyamide is herein understood a polyamide that is essentially or completely amorphous, and that has a melt enthalpy if any, of less than 10 J/g. Herein the melt enthalpy is measured by the DSC method according to ISO-11357-1/3, 2011, in an N2 atmosphere with a heating rate of 20°C/min in the first heating cycle.

Examples of semi-crystalline aliphatic thermoplastic polyamide include polyamides based on cyclic aliphatic lactams, for example PA-6, PA-11, PA12, or based on aliphatic diamantes and aliphatic carboxylic acids, for example PA-66, PA-46, PA-610, PA-612, PA-412 and PA-410, and any copolyamides thereof. In particular PA-410 is preferred.

Examples of semi-crystalline semi-aromatic thermoplastic polyamides include polyamides based on aliphatic diamines and aromatic carboxylic acids comprising terephthalic acid, for example PA-6T, PA-9T, PA-10T, PA-6T/10T and PA-6T/6I, and any copolymers thereof, or based on aliphatic diamantes and a combination of aliphatic carboxylic acid and aromatic carboxylic acid, for example PA-66/6T, PA-4T/6T/66, PA10T/106, and any copolyamides thereof.

Examples of amorphous semi-aromatic thermoplastic polyamide include polyamides based on aliphatic diamines and aromatic carboxylic acids comprising isophthalic acid, for example PA-6I, PA-6I/6T and PA-DT/DI.

In a preferred embodiment, the thermoplastic polyamide comprises a mixture of at least two semi-crystalline semi-aromatic thermoplastic polyamides. The advantage is that the mixture allows for optimization of, for example, flow properties on one hand and mechanical properties on the other. The mechanical properties may be supported by using a polyamide with a sufficiently high molecular weight, such as with a polyamide polymer with an Mn in the range of 7,000 - 50,000 dalton. Herein Mn is the number average molecular weight. The flow properties may be enhanced by using for the second polyamide a lower melting polyamide, or a polyamide with a sufficiently low molecular weight, such as with a polyamide oligomer or prepolymer with an Mn in the range of 500 - 5,000 dalton. A general effect of the use of such a polyamide prepolymer is that the elongation at break under tensile loading goes down. However, in the composition according to the present invention, the reduction in elongation is limited, while at the same time the tensile strength increases in substantial extent.

In another preferred embodiment, the composition comprises a mixture of at least two thermoplastic polyamides, wherein the mixture comprises a semi-crystalline polyamide and an amorphous thermoplastic polyamide. Also this embodiment has the effect that elongation might be reduced, but only in limited extend, while at the same time the tensile strength is increased, thereby resulting in a product having a tensile strength higher than obtained for any of the individual types of glass fibers with a single polyamide.

The thermoplastic polyamide can be present in the composition according to the invention in an amount varying over a wide range. Suitably, the amount is in the range of 20 - 85 wt.%, or more particular in the range of 20 - 70 wt.%. Preferably, the amount is in the range of 25 - 65 wt.%, more particular 30 - 60 wt.%.

The composition according to the invention may comprise, next to the thermoplastic polyamide and the mixture of E-glass and High Strength-glass, one or more other constituents. Such other constituents are suitably selected from polymers other than thermoplastic polyamide, reinforcing agents and fillers other than E-glass and High Strength-glass, flame retardants, and other additives. The other additives, which may be any additive, is suitably selected from auxiliary additives used in polyamide molding compositions. Examples thereof are processing aids, stabilizers, nucleating agents, colorants and pigments.

Suitably, the composition comprises an amount of 0 - 30 wt.% of at least one other constituent. The amount may well be in the range is of 1 - 20 wt.%.

In a particular embodiment of the invention the composition consists of:
a. 20 - 70 wt.% of the thermoplastic polyamide;
b. 25 - 70 wt.% of the mixture of E-glass and High Strength-glass; and
c. 0 - 30 wt.% of at least one other constituent;

Herein, the weight percentages (wt.%) are relative to the total weight of the composition and the total amount of a, b and c equals 100 wt.%.

In another embodiment the composition consists of:
a. 30 - 60 wt.% of the thermoplastic polyamide;
b. 30 - 65 wt.% of the mixture of E-glass and High Strength-glass; and
c. 0 - 20 wt.% of at least one other constituent.

Herein, the weight percentages (wt.%) are relative to the total weight of the composition and the total amount of a, b and c equals 100 wt.%.

The polymer molding composition according to the invention can be prepared by employing conventional methods, as well as processed by employing conventional methods and conventional methods. The preparation may be done, for example, by melt processing of the thermoplastic polymer in a twin screw extruder and adding the mixture of glass fibers to the twin screw extruder employing conventional processing conditions for making a thermoplastic polymer molding composition. For the processing of the thermoplastic polymer molding composition and the production of components, an injection molding machine may be used, employing conventional processing conditions for injection molding of thermoplastic polymer molding compositions.

The invention also relates to a molded part, made from the thermoplastic polymer molding composition according to the invention, as well as to the manufacturing thereof. The molded part may be a component or semi-finished product, or a finished product. The invention also relates to an assembled product, comprising a molded part made from the thermoplastic polymer molding composition according to the invention. Examples of such molded parts include structural parts for an electronic device, structural parts for an automotive engine, and support elements for an automotive engine.

In a preferred embodiment, the molded part is a stiffener, a frame or a housing, or a part thereof, for electrical and electronic devices, in particular for portable devices and hand-held devices such as mobile phones, portable computers and tablets, or a part of an electrical connector.

The assembled product suitably is an electrical or electronic device, comprising a molded part according to the invention, in particular a portable device comprising a stiffener, a frame or a housing, or a part thereof, made of the thermoplastic polymer molding composition according to the invention. The advantage thereof is that the assembly or mounting of the device occurs with less mechanical defects and/or that the device is better protected against mechanical damages.

The invention is further illustrated with the following examples and comparative experiments.

### Materials

| | |
|---|---|
| SC-APA-1: | PA 410: aliphatic polyamide, Tm 250 °C, VN 150 ml/g, measured in 0,5 g/dL in Formic Acid (90% pure) |
| SC-APA-2: | PA 46: aliphatic polyamide, TM 290 °C, VN 80 g/ml, measured in 0,5 g/dL in Formic Acid (90% pure) |
| A-PPA: | PA6I/6T, amorphous semi-aromatic polyamide, Tg 130 °C, RV [-] of 6I/6T is measured in 1g/dL in sulfuric acid (95% pure) |
| E-glass | Glass fibers made of E-glass composition; 10 um diameter; standard grade for thermoplastic polyamide compositions, wherein the glass consists of the following components: - 53-54 wt.% silicon dioxide, - 13-15 wt.% aluminum oxide, - 18-20 wt.% calcium oxide, - 7-8 wt.% boron oxide, - 0-2 wt.% magnesium oxide, and - less than 1 wt.% other components |
| HS-glass-#1 | Glass fibers made of S-glass composition; 10 um diameter; standard grade for thermoplastic polyamide compositions, wherein the glass consists of the following components: - 64 - 66 wt.% silicon dioxide, - 24 - 25 wt.% aluminum oxide, - 0.1 wt.% calcium oxide, - 0 wt.% boron oxide, - 9.5-10 wt.% magnesium oxide, and - less than 1 wt.% other components |
| HS-glass-#2 | Glass fibers made of second high strength glass composition; 10 um diameter; standard grade for thermoplastic polyamide compositions, wherein the glass consists of the following components: - 57 - 59 wt.% silicon dioxide, - 20 -22 wt.% aluminum oxide, - 8 - 10 wt.% calcium oxide, - 0 wt.% boron oxide, - 11-13 wt.% magnesium oxide, and - less than 3 wt.% other components. |

Stabilizer package: Package of standard stabilizers
Colorant package-1: Master batch with white pigment
Colorant package-2: Master batch with off-white pigment

### Experiments and results

Tables 1 and 2 comprise a number of compositions according to the invention (Examples I-VI) and comparative experiments (CE-A- G), as well as the mechanical properties thereof. Molding compositions were prepared on a standard compounding apparatus using standard conditions for glass reinforced polyamide molding compositions.

### Mechanical properties

For the mechanical test, test bars conforming ISO 527 type 1A were molded from the glass reinforced polyamide molding compositions, using melt injection molding machine.

The mechanical properties (tensile modulus [MPa], tensile strength [MPa], elongation at break [%]) were measured in a tensile test according to ISO 527 at 23°C.

Spiral flow length was determined on spiral cavity with dimensions 280 x 15 x 1 mm at a temperature 10°C above the melt temperature of the main polymer component and at 80, 90 and 100 MPa effective injection pressures.

**Table 1. Compositions of examples of according to the invention (EX I-V) and comparative experiments (CE-A and B), and mechanical properties thereof.**

| | **CE-A** | **EX-I** | **EX-II** | **EX-III** | **CE-B** | **EX-IV** | **EX-V** |
|---|---|---|---|---|---|---|---|
| ***Constituents*** | | | | | | | |
| SC-APA-1 | 37.25 | 37.25 | 37.25 | 37.25 | 37.25 | 31.5 | 35.8 |
| SC-APA-2 | - | - | - | - | - | - | 1.2 |
| A-PPA | - | - | - | - | - | 5.5 | - |
| HS-glass-#1 | | | | | - | 27.50 | 27.50 |
| HS-glass-#2 | 55.00 | 41.25 | 27.50 | 13.75 | - | - | - |
| E-glass | - | 13.75 | 27.50 | 41.25 | 55.00 | 27.50 | 27.50 |
| Stabilizer package | 0.75 | 0.75 | 0.75 | 0.75 | 0.75 | 1 | 1 |
| Colorant package-1 | 7 | 7 | 7 | 7 | 7 | 7 | 7 |
| ***Ratio E:HS*** | 0/100 | 25/75 | 50/50 | 75/25 | 100/0 | 50/50 | 50/50 |
| | | | | | | | |

| ***Mechanical Data*** | | | | | | | |
|---|---|---|---|---|---|---|---|
| Modulus (MPa) | 21029 | 20627 | 20174 | 19620 | 19360 | 21095 | 20553 |
| Tensile strength (MPa) | 241.3 | 237.3 | 228.7 | 224.4 | 223.3 | 258.4 | 247.5 |
| Elongation at break (%) | 2.65 | 2.73 | 2.78 | 2.73 | 2.6 | 2.54 | 2.55 |

The results show a much better elongation at break for EX-I, II and III than for the corresponding comparative examples A and B, and also for EX-VI compared to corresponding comparative examples C and D. Meanwhile the tensile strength remains at a good level.

Examples IV and V, comprising an amorphous polyamide, respectively a semi-crystalline polyamide prepolymer, which provide a significant improvement in flow, show a somewhat lower elongation, but a significantly higher tensile strength. Adding the same components to a composition comprising only E-glass, as reported in Table 2, show an increase in tensile strength as well, but results in much larger drop in elongation at break.

**Table 2. Composition Example of according to the invention (EX VI) and comparative experiments (CE-C - G), and mechanical properties thereof.**

| | **CE-C** | **EX-VI** | **CE-D** | **CE-E** | **CE-F** | **CE-G** |
|---|---|---|---|---|---|---|
| ***Constituents*** | | | | | | |
| SC-APA-1 | 39.6 | 39.6 | 39.6 | 34.6 | 33.7 | 38.4 |
| SC-APA-2 | - | - | - | - | - | 1.2 |
| A-PPA | - | - | - | - | 5.7 | - |
| HS-glass#1 | 55.00 | 27.50 | - | - | - | - |
| E-glass | - | 27.50 | 55.00 | 60 | 55.00 | 55.00 |
| Stabilizer package | 0.4 | 0.4 | 0.4 | 0.4 | 0.4 | 0.4 |
| Colorant package-2 | 5 | 5 | 5 | 5 | 5 | 5 |
| ***Ratio E:HS*** | 0/100 | 50/50 | 100/0 | 100/0 | 100/0 | 100/0 |
| | | | | | | |

| ***Mechanical Data*** | | | | | | |
|---|---|---|---|---|---|---|
| Modulus (MPa) | 22469 | 19213 | 19137 | 20499 | 20272 | 19770 |
| Tensile strength (MPa) | 263.7 | 232.9 | 230.4 | 233.7 | 250.8 | 239.8 |
| Elongation at break (%) | 2.49 | 3.06 | 2.79 | 2.53 | 2.28 | 2.45 |
| Charpy unnotched/1eU (KJ/m²) | 93.8 | 93.0 | 90.2 | 87.0 | 90.5 | 92.7 |

| ***Spiral Flow 1mm*** | | | | | | |
|---|---|---|---|---|---|---|
| 800bar | 5.00 | 4.70 | 4.80 | 5.60 | 7.67 | 5.70 |
| 1000bar | 6.20 | 5.80 | 5.80 | 6.90 | 9.07 | 6.90 |
| 1200bar | 7.50 | 7.00 | 7.10 | 8.20 | 10.5 | 8.20 |

In comparative experiment E the amount of E-glass is increased, compared to the amount in comparative experiment D. The results show that this only slightly increases the modulus and tensile strength, but has a negative effect on the elongation at break and the impact strength.

## Claims

1. Reinforced polymer molding composition, comprising a thermoplastic polymer and a fibrous reinforcing agent, wherein the thermoplastic polymer comprises a thermoplastic polymer selected from LCP, polyester, PPS, polycarbonate and polyamide, the fibrous reinforcing agent comprises a mixture of glass fibers made of E-glass and glass fibers made of High Strength-glass, and the E-glass and the High Strength-glass are present in a weight ratio E:HS in a range from 80:20 up to and including 20:80.

2. Composition according to claim 1, wherein
the E-glass consists of:
- 52 - 62 wt.% silicon dioxide (SiO₂),
- 12 - 16 wt.% aluminum oxide (Al₂O₃),
- 16 - 25 wt.% calcium oxide (CaO),
- 0 - 10 wt.% boron oxide (B₂O₃),
- 0 - 5 wt.% magnesium oxide (MgO), and
- 0 - 5 wt.% other components,
wherein the weight percentages (wt.%) are relative to the total weight of the E-glass;
and the High Strength-glass consists of
- 57 - 70 wt.% silicon dioxide (SiO₂),,
- 18 - 30 wt.% aluminum oxide (Al₂O₃),
- 0 - 10 wt.% calcium oxide (CaO),
- 0 - 5 wt.% boron oxide (B₂O₃),
- 7 - 15 wt.% magnesium oxide (MgO), and
- 0 - 5 wt.% other components,
wherein the weight percentages (wt.%) are relative to the total weight of the High Strength-glass.

3. Composition according to claim 2, wherein the High Strength glass consists of:
- 58 - 68 wt.% silicon dioxide,
- 20 - 28 wt.% aluminum oxide,
- 0 - 5 wt.% calcium oxide,
- 0 - 5 wt.% boron oxide,
- 8 - 13 wt.% magnesium oxide, and
- 0 - 5 wt.% other components,
wherein the weight percentages (wt.%) are relative to the total weight of the High Strength-glass.

4. Composition according to claim 2, wherein the High Strength glass consists of:
- 62 - 66 wt.% silicon dioxide,
- 22 - 27 wt.% aluminum oxide,
- 0 - 5 wt.% calcium oxide,
- 0 - 3 wt.% boron oxide,
- 8 - 12 wt.% magnesium oxide, and
- 0 - 3 wt.% other components,
wherein the weight percentages (wt.%) are relative to the total weight of the High Strength-glass.

5. Composition according to any of claim 1-4, wherein the E-glass fibers and the High Strength-glass fibers are present in the weight ratio E:HS in a range from25:75 up to and including 60:40.

6. Composition according to any of claim 1-5, wherein thermoplastic polymer comprises a semi-crystalline polyamide.

7. Composition according to any of claim 1-6, wherein thermoplastic polymer comprises a mixture of at least two thermoplastic polyamides.

8. Composition according to claim 7, wherein the mixture of at least two thermoplastic polyamides comprises a semi-crystalline polyamide and an amorphous thermoplastic polyamide.

9. Composition according to any of claim 1-8, wherein the E-glass fibers, or the High Strength-glass fibers, or E-glass fibers and the High Strength-glass fibers have a non-circular cross section with an axial ratio of the cross-sectional axes in the range of 1.5 - 6, preferably in the range of 2 - 4.

10. Composition according to any of claim 1-9, wherein the composition consists of
a. 20 - 70 wt.% of the thermoplastic polyamide;
b. 25 - 70 wt.% of the mixture of E-glass and High Strength-glass; and
c. 0 - 30 wt.% of at least one other component;
and wherein the weight percentages (wt.%) are relative to the total weight of the total amount of a, b and c equals 100 wt.%.

11. Molded part, made of a reinforced polymer molding composition as defined in any of claims 1-10.

12. Molded part according to claim 11, wherein the molded part is a structural part for an electronic device, or a structural part an automotive engine, or a support element for an automotive engine.

13. Molded part according to claim 11 or 12, wherein the molded part is a stiffener, a frame or a housing, or a part thereof, for a portable electronic device, or is a connector part.

14. Electrical or electronic device, comprising a molded part according to any of claims 11-13.

## Patentansprüche

1. Verstärkte Polymer-Formzusammensetzung, umfassend ein thermoplastisches Polymer und ein Faserverstärkungsmittel, wobei das thermoplastische Polymer ein thermoplastisches Polymer ausgewählt aus LCP, Polyester, PPS, Polycarbonat und Polyamid umfasst, das Faserverstärkungsmittel ein Gemisch aus Glasfasern, die aus E-Glas bestehen, und Glasfasern, die aus hochfestem Glas bestehen, umfasst, und das E-Glas und das hochfeste Glas in einem Gewichtsverhältnis E:HS in einem Bereich von 80:20 bis einschließlich 20:80 vorliegen.

2. Zusammensetzung gemäß Anspruch 1, wobei
das E-Glas aus:
- 52-62 Gew.-% Siliciumdioxid (SiO₂),
- 12-16 Gew.-% Aluminiumoxid (Al₂O₃),
- 16-25 Gew.-% Calciumoxid (CaO),
- 0-10 Gew.-% Boroxid (B₂O₃),
- 0-5 Gew.-% Magnesiumoxid (MgO) und
- 0-5 Gew.-% anderen Komponenten
besteht, wobei die Gewichtsprozentwerte (Gew.-%) auf das Gesamtgewicht des E-Glases bezogen sind;
und das hochfeste Glas aus:
- 57-70 Gew.-% Siliciumdioxid (SiO₂),
- 18-30 Gew.-% Aluminiumoxid (Al₂O₃),
- 0-10 Gew.-% Calciumoxid (CaO),
- 0-5 Gew.-% Boroxid (B₂O₃),
- 7-15 Gew.-% Magnesiumoxid (MgO) und
- 0-5 Gew.-% anderen Komponenten
besteht, wobei die Gewichtsprozentwerte (Gew.-%) auf das Gesamtgewicht des hochfesten Glases bezogen sind.

3. Zusammensetzung gemäß Anspruch 2, wobei das hochfeste Glas aus:
- 58-68 Gew.-% Siliciumdioxid,
- 20-28 Gew.-% Aluminiumoxid,
- 0-5 Gew.-% Calciumoxid,
- 0-5 Gew.-% Boroxid,
- 8-13 Gew.-% Magnesiumoxid und
- 0-5 Gew.-% anderen Komponenten
besteht, wobei die Gewichtsprozentwerte (Gew.-%) auf das Gesamtgewicht des hochfesten Glases bezogen sind.

4. Zusammensetzung gemäß Anspruch 2, wobei das hochfeste Glas aus:
- 62-66 Gew.-% Siliciumdioxid,
- 22-27 Gew.-% Aluminiumoxid,
- 0-5 Gew.-% Calciumoxid,
- 0-3 Gew.-% Boroxid,
- 8-12 Gew.-% Magnesiumoxid und
- 0-3 Gew.-% anderen Komponenten
besteht, wobei die Gewichtsprozentwerte (Gew.-%) auf das Gesamtgewicht des hochfesten Glases bezogen sind.

5. Zusammensetzung gemäß einem der Ansprüche 1-4, wobei die Fasern aus E-Glas und die Fasern aus hochfestem Glas in einem Gewichtsverhältnis E:HS in einem Bereich von 25:75 bis einschließlich 60:40 vorhanden sind.

6. Zusammensetzung gemäß einem der Ansprüche 1-5, wobei das thermoplastische Polymer ein halbkristallines Polyamid umfasst.

7. Zusammensetzung gemäß einem der Ansprüche 1-6, wobei das thermoplastische Polymer ein Gemisch von wenigstens zwei thermoplastischen Polyamiden umfasst.

8. Zusammensetzung gemäß Anspruch 7, wobei das Gemisch von wenigstens zwei thermoplastischen Polyamiden ein halbkristallines Polyamid und ein amorphes thermoplastisches Polyamid umfasst.

9. Zusammensetzung gemäß einem der Ansprüche 1-8, wobei die Fasern aus E-Glas oder die Fasern aus hochfestem Glas oder die Fasern aus E-Glas und die Fasern aus hochfestem Glas einen nichtkreisförmigen Querschnitt mit einem Achsenverhältnis der Querschnittsachsen in dem Bereich von 1,5-6, vorzugsweise in dem Bereich von 2-4, aufweisen.

10. Zusammensetzung gemäß einem der Ansprüche 1-9, wobei die Zusammensetzung aus:
a. 20-70 Gew.-% an dem thermoplastischen Polyamid;
b. 25-70 Gew.-% an dem Gemisch von E-Glas und hochfestem Glas; und
c. 0-30 Gew.-% an wenigstens einer anderen Komponente;
besteht und wobei die Gewichtsprozentwerte (Gew.-%) auf das Gesamtgewicht der Gesamtmenge von a, b und c gleich 100 Gew.-% bezogen sind.

11. Formkörper, hergestellt aus einer verstärkten Polymer-Formzusammensetzung gemäß einem der Ansprüche 1-10.

12. Formkörper gemäß Anspruch 11, wobei der Formkörper ein Strukturteil für eine elektronische Vorrichtung oder ein Strukturteil eines Automobilmotors oder ein Trägerelement eines Automobilmotors ist.

13. Formkörper gemäß Anspruch 11 oder 12, wobei der Formkörper ein Versteifungselement, ein Rahmen oder ein Gehäuse oder ein Teil davon für eine tragbare elektronische Vorrichtung ist oder ein Verbindungselement ist.

14. Elektrische oder elektronische Vorrichtung, umfassend einen Formkörper gemäß einem der Ansprüche 11-13.

## Revendications

1. Composition de polymère renforcé à mouler, comprenant un polymère thermoplastique et un agent renforçant fibreux, dans laquelle le polymère thermoplastique comprend un polymère thermoplastique choisi entre un PCL, un polyester, un PPS, un polycarbonate et un polyamide, l'agent renforçant fibreux comprend un mélange de fibres de verre constituées de verre E et de fibres de verre constituées de verre à haute résistance et le verre E et le verre à haute résistance sont présents en un rapport pondéral E:HS dans une plage allant de 80:20 jusqu'à 20:80 ce dernier étant inclus.

2. Composition selon la revendication 1, dans laquelle le verre E est constitué de :
- 52-62 % en poids de dioxyde de silicium (SiO₂),
- 12-16 % en poids d'oxyde d'aluminium (Al₂O₃),
- 16-25 % en poids d'oxyde de calcium (CaO),
- 0-10 % en poids d'oxyde de bore (B₂O₃),
- 0-5 % en poids d'oxyde de magnésium (MgO) et
- 0-5 % en poids d'autres constituants,
les pourcentages en poids (% en poids) étant par rapport au poids total du verre E ;
et le verre à haute résistance est constitué de
- 57-70 % en poids de dioxyde de silicium (SiO₂),
- 18-30 % en poids d'oxyde d'aluminium (Al₂O₃),
- 0-10 % en poids d'oxyde de calcium (CaO),
- 0-5 % en poids d'oxyde de bore (B₂O₃),
- 7-15 % en poids d'oxyde de magnésium (MgO) et
- 0-5 % en poids d'autres constituants,
les pourcentages en poids (% en poids) étant par rapport au poids total du verre à haute résistance.

3. Composition selon la revendication 2, dans laquelle le verre à haute résistance est constitué de :
- 58-68 % en poids de dioxyde de silicium,
- 20-28 % en poids d'oxyde d'aluminium,
- 0-5 % en poids d'oxyde de calcium,
- 0-5 % en poids d'oxyde de bore,
- 8-13 % en poids d'oxyde de magnésium et
- 0-5 % en poids d'autres constituants,
les pourcentages en poids (% en poids) étant par rapport au poids total du verre à haute résistance.

4. Composition selon la revendication 2, dans laquelle le verre à haute résistance est constitué de :
- 62-66 % en poids de dioxyde de silicium,
- 22-27 % en poids d'oxyde d'aluminium,
- 0-5 % en poids d'oxyde de calcium,
- 0-3 % en poids d'oxyde de bore,
- 8-12 % en poids d'oxyde de magnésium et
- 0-3 % en poids d'autres constituants,
les pourcentages en poids (% en poids) étant par rapport au poids total du verre à haute résistance.

5. Composition selon l'une quelconque des revendications 1-4, dans laquelle les fibres de verre E et les fibres de verre à haute résistance sont présentes en un rapport pondéral E:HS dans une plage allant de 25:75 jusqu'à 40:60 ce dernier étant inclus.

6. Composition selon l'une quelconque des revendications 1-5, dans laquelle le polymère thermoplastique comprend un polyamide semi-cristallin.

7. Composition selon l'une quelconque des revendications 1-6, dans laquelle le polymère thermoplastique comprend un mélange d'au moins deux polyamides thermoplastiques.

8. Composition selon la revendication 7, dans laquelle le mélange d'au moins deux polyamides thermoplastiques comprennent un polyamide semi-cristallin et un polyamide thermoplastique amorphe.

9. Composition selon l'une quelconque des revendications 1-8, dans laquelle les fibres de verre E, ou les fibres de verre à haute résistance, ou les fibres de verre E et les fibres de verre à haute résistance ont une section transversale non circulaire avec un taux d'ellipticité des axes de la section transversale dans la plage de 1,5-6, de préférence dans la plage de 2-4.

10. Composition selon l'une quelconque des revendications 1-9, la composition étant constituée de
a. 20-70 % en poids du polyamide thermoplastique ;
b. 25-70 % en poids du mélange de verre E et de verre à haute résistance ; et
c. 0-30 % en poids d'au moins un autre constituant ; et les pourcentages en poids (% en poids) étant par rapport au poids total de la quantité totale de a, b et c égale à 100 % en poids.

11. Pièce moulée, constituée d'une composition de polymère renforcé à mouler telle que définie dans l'une quelconque des revendications 1-10.

12. Pièce moulée selon la revendication 11, la pièce moulée étant une pièce de structure pour un dispositif électronique, ou une pièce de structure d'un moteur d'automobile, ou un élément de support pour un moteur d'automobile.

13. Pièce moulée selon la revendication 11 ou 12, la pièce moulée étant un renfort, une armature ou un boîtier, ou une partie de ceux-ci, pour un dispositif électronique portable, ou étant une pièce de connecteur.

14. Dispositif électrique ou électronique, comprenant une pièce moulée selon l'une quelconque des revendications 11-13.
